# EUROPEAN PATENT SPECIFICATION

(11) **EP 1 605 673 B1**
(45) Date of publication and mention of the grant of the patent: **13.04.2016**
(21) Application number: 05012378.5
(22) Date of filing: 08.06.2005
(51) Int. Cl.: H04H 40/90, H04M 1/725

(54) **Mobile communication terminal and method for processing communication function during DMB (Digital Multimedia Broadcasting) output**
Mobiles Kommunikationsendgerät und Methode zur Verarbeitung der Kommunikationsfunktion während der Wiedergabe von DMB (Digital Multimedia Broadcasting)
Terminal mobile de télécommunication et procédé pour le traitement de la fonction de communication pendant sortie DMB (Digital Multimedia Broadcasting)

(30) Priority: 08.06.2004 KR 2004041647; 03.06.2005 KR 2005047518
(43) Date of publication of application: 14.12.2005
(73) Proprietor: Samsung Electronics Co., Ltd., Suwon-si, Gyeonggi-do, 443-742 (KR)
(72) Inventor: Byun, Hye-Jung, Suwon-si Gyeonggi-do (KR); Lee, Yong-Gu, Suwon-si Gyeonggi-do (KR); Kim, Hark-Sang, Suwon-si Gyeonggi-do (KR); Park, Seok-Hyo, Gumi-si Gyeonggisangbuk-do (KR); Yoon, Jun, Suwon-si Gyeonggi-do (KR)
(74) Representative: Grünecker Patent- und Rechtsanwälte PartG mbB

(56) References cited:
- EP-A- 1 424 838
- US-A1- 2005 070 327
- US-B1- 6 529 742
- PATENT ABSTRACTS OF JAPAN vol. 2003, no. 08, 6 August 2003 (2003-08-06) & JP 2003 111004 A (SANYO ELECTRIC CO LTD), 11 April 2003 (2003-04-11)

## Description

The present invention relates to a mobile communication terminal capable of receiving digital broadcasting data, and more particularly to a mobile communication terminal and a method for processing a communication function during digital broadcasting data output.

Recently, there has been an increased interest in a digital broadcasting service using a mobile communication terminal, particularly, a digital-multimedia-broadcasting ("DMB") service.

The DMB service implies a broadcasting service enabling subscribers to view or listen to various multimedia broadcasting services through multiple channels by means of a portable receiver or a vehicle receiver having an omnidirectional receive antenna even when the subscribers are outdoors or while they are on the move.

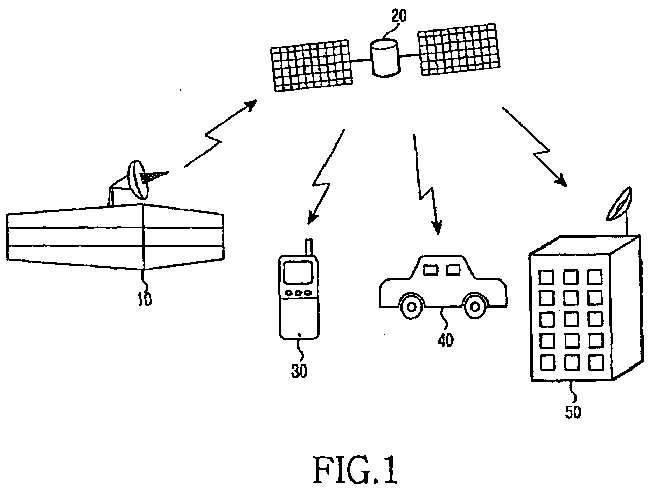

FIG 1 shows a structure of a system for realizing the DMB service. The system for realizing the DMB service includes a data transmitting center 10, a satellite 20, and receive apparatuses (e.g., a mobile communication terminal 30, a vehicle receiver 40, and a home receiver 50). The data transmitting center 10 compresses and modulates digital-multimedia-broadcasting data (e.g., video, audio, data, etc.), thereby transmitting the digital-multimedia-broadcasting data to the satellite 20. The satellite 20 receives, amplifies, and then frequency transforms signals transmitted from the data transmitting center 10 and retransmits the signal to the ground. Receive apparatuses such as the mobile communication terminal 30, the vehicle receiver 40, and/or the home receiver 50 can each receive, decode, and then decompress the signals retransmitted from the satellite 20 and convert the signals into original signals so as to output the signals.

At this time, when receiving a communication request signal while viewing or listening to DMB using the mobile communication terminal 30 from among apparatuses such as the mobile communication terminal 30, the vehicle receiver 40, and/or the home receiver 50, the user must select one of a DMB outputting function and a communication function.

Accordingly, if performing telephone communication while viewing or listening to DMB, the user cannot view and/or listen to DMB corresponding to telephone communication time.

Accordingly, the present invention has been made to solve the above-mentioned problems occurring in the prior art.

EP 1 424 838 A relates to a system which harmonizes the function of receiving and reproducing broadcast content with a telephone function. The broadcast receiving apparatus described is composed of a signal separator connected to an antenna, a telephone unit, a TV receiver unit, a key input unit, an interface unit and a microcomputer. The following is an explanation of the operation when there is an incoming call in the course of reproducing a television broadcast. In order to respond to an incoming call, the user operates a talk key. Then, the operation information is supplied via the key input unit to the microcomputer. At this time, the microcomputer determines that the communication mode turns on and outputs a record start signal to a video/audio recorder. Then, the video/audio recorder operates so as to record the video data and audio data inputted to a buffer onto a recording medium without outputting the video and audio data to the interface unit. Having determined that the communication mode has been turned on, the microcomputer brings the telephone unit into the busy state. As a result, the reproduction of the television broadcast is interrupted and the talk with the calling party is realized. When the user operates an hold key after finishing the talk, the operation information is inputted via the key input unit to the microcomputer. Then, the microcomputer determines that the talk has been finished and brings the telephone unit into the incoming call waiting state. At this time, the microcomputer outputs a reproduction start signal to the video/audio recorder. Then, the video/audio recorder reads the video and audio data recorded in the recording medium according to the recorded time sequence and overwrites sequentially the recording area from which the data was read with the new video data and audio data obtained from the decoder. That is, time-slipped reproduction is carried out.

Patent Abstracts of Japan Vol. 2003, No. 08, August 6, 2003 and JP 2003 111004 A relate to a portable viewing device. The mobile viewing device starts processing of recording coded video/audio data of a program during viewing to an SDRAM when a portable telephone section receives an incoming call and starts making a speech during program viewing processing. When the speech is finished, the portable viewing device reads the coded video/audio data from the SDRAM while continuing video recording processing and reproduces the program by chasing the video image at the point of speech start time.

It is the object of the present invention to enable more convenient managing of digital broadcasting data.

The object is solved by the subject matter of the independent claims.

Preferred embodiments are defined in the dependent claims.

It is an aspect of the present invention to provide a mobile communication terminal and a method, which can simultaneously provide a communication function without the loss of digital broadcasting data and also provide a digital broadcasting data output.

It is an aspect of the present invention to provide a mobile communication terminal and a method which can enhance the quality of a digital broadcasting service using a mobile communication terminal.

It is another aspect of the present invention to provide a mobile communication terminal and a method which can conveniently provide a digital broadcasting viewing or listening function and a communication function to a digital broadcasting service user using a mobile communication terminal.

To accomplish the above, there is provided a mobile communication terminal including a digital broadcasting data receiving unit for receiving digital broadcasting data, a communication state detecting unit for controlling storage or output of received digital broadcasting data based on communication state information of the mobile communication terminal, a storage unit for storing the received digital broadcasting data under control of the communication state detection unit, and an output unit for outputting the received digital broadcasting data or the digital broadcasting data stored in the storage unit.

According to another aspect of the present invention, there is provided a method for processing a communication function during digital broadcasting output by a mobile communication terminal, the method including the steps of determining if a communication request is generated during the digital broadcasting output, and if the communication request is generated, stopping digital broadcasting data output and storing received digital broadcasting data. In particular, the method further includes the steps of extracting and outputting the stored digital broadcasting data in a sequence according to a length of time during which the stored digital broadcasting data are stored after the communication is terminated and scrambling the digital broadcasting data before the digital broadcasting data are stored.

The above and other objects, features and advantages of the present invention will be more apparent from the following detailed description taken in conjunction with the accompanying drawings, in which:
FIG. 1 shows a structure of a system for realizing a DMB service;
FIG 2 is a schematic block diagram illustrating a structure of a mobile communication terminal according to an embodiment of the present invention;
FIG. 3 is a block diagram illustrating a structure of a DMB control unit of a mobile communication terminal according to an embodiment of the present invention;
FIG 4 is a flowchart illustrating a method for processing a communication function during DMB output according to an embodiment of the present invention;
FIG 5 is a block diagram illustrating a structure of a DMB module realized in a mobile communication terminal according to another embodiment of the present invention;
FIG. 6 is a flowchart illustrating a method of processing a communication function during DMB output according to another embodiment of the present invention;
FIG 7 is a block diagram illustrating a structure of a DMB module realized in a mobile communication terminal according to another embodiment of the present invention; and
FIG 8 is a flowchart illustrating a method of processing a communication function during DMB output according to another embodiment of the present invention.

Hereinafter, preferred embodiments of the present invention will be described in detail with reference to the accompanying drawings. Note that the same or similar components in drawings are designated by the same reference numerals as far as possible although they are shown in different drawings. In the following description of the present invention, a detailed description of known functions and configurations incorporated herein will be omitted when it may make the subject matter of the present invention unclear. Although DMB from among digital broadcasting services will be described in the following description, it is well known to those skilled in the art that the present invention can be applied to other digital broadcasting services.

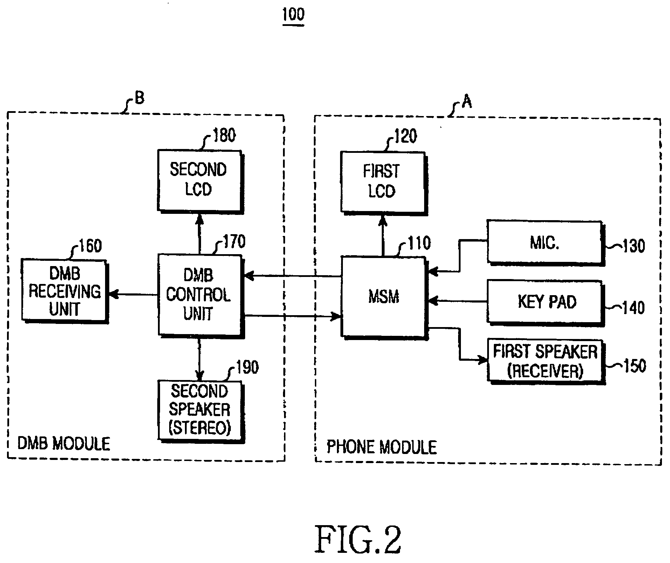

FIG. 2 is a schematic block diagram illustrating a mobile communication terminal 100 according to an embodiment of the present invention. The mobile communication terminal 100 according to the present invention includes a portable phone function module (phone-module) A for controlling the portable phone function and a broadcasting function module (DMB module) B for controlling the broadcasting receiving function.

The phone-module A includes a main control unit (MSM) 110 which can be realized using a mobile station modem chip for controlling the overall function of the mobile communication terminal including the portable phone function, a first liquid crystal display (LCD) 120 for displaying information relating to the overall function of the mobile communication terminal including the portable phone function, a microphone 130 for receiving an audio signal, a key pad 140 used for inputting a control command to the MSM 110, and a first speaker 150 for outputting an audio signal relating to the execution of the portable phone function. Herein, the first speaker 150 operates as a receiver for receiving sound signals and outputting a corresponding tone.

In the meantime, the DMB module B includes a DMB receiving unit 160 for receiving DMB data, a DMB control unit 170 used for outputting information provided to a user by decoding the DMB data, a second LCD 180 for displaying image information output from the DMB control unit 170, and a second speaker 190 for outputting an audio signal output from the DMB control unit 170. Herein, the second speaker 190 outputs sound information included in multimedia information and can provide an optional stereo function. In addition, the second LCD 180 outputs image information included in the multimedia information. The second speaker 190 and the second LCD 180 are included in an output interface unit for outputting digital broadcasting. The output interface unit includes one of a speaker and an LCD according to types of the digital broadcasting. For example, in the case of a mobile communication terminal for processing only digital audio broadcast, only a speaker is included in the output interface unit. Alternatively, if it is envisioned that the mobile communication terminal will be used for both digital, audio and video broadcastings both at least one speaker and a video display such as an LCD can be provided.

In alternative embodiments, the first speaker 150 and the second speaker 190 can be formed integrally with each other such that only one speaker is provided. Likewise, the first LCD 120 and the second LCD 180 can be formed integrally with each other.

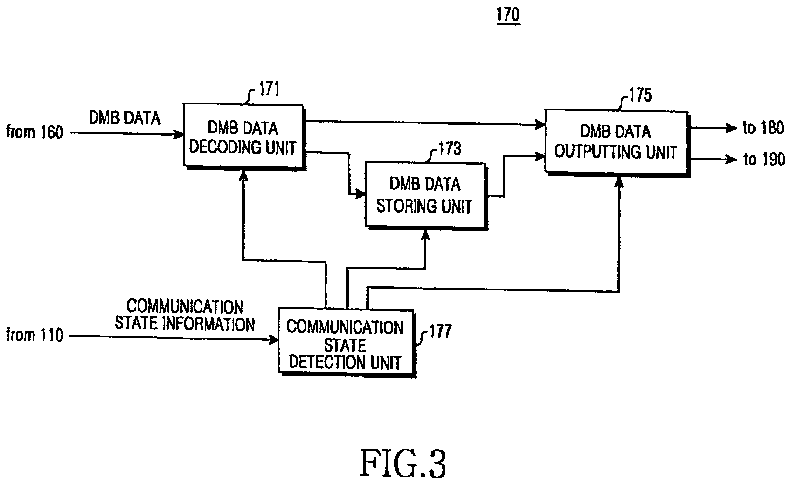

In particular, the DMB control unit 170 stores the DMB data received from the DMB receiving unit 160 in the internal memory while the mobile communication terminal 110 is performing the communication function and then outputs the DMB data after the termination of the communication. In detail, the DMB control unit 170 receives communication state information from the MSM 110 and processes the received DMB data according to the communication state information. This structure of the DMB data unit 170 is shown in FIG 3 by way of example.

In the meantime, the control unit 170 continuously checks a memory capacity while storing the DMB data in a DMB storing unit 173, so as to determine if the memory capacity of the DMB storing unit 173 is in a full state. If the control unit 170 can store no more broadcasting data in the DMB storing unit 173, the control unit 170 stops storing the DMB data and either displays a message for reporting the excess of the memory capacity to the second LCD (i.e., the display unit 180) or gives an alarm while displaying the message, so as to report the full state of the memory capacity to a user.

FIG. 3 is a block diagram illustrating a structure of the DMB control unit 170 of the mobile communication terminal according to an embodiment of the present invention. The DMB control unit 170 includes a DMB data decoding unit 171, the DMB data storing unit 173, a DMB data outputting unit 175, and a communication state detecting unit 177.

The communication state detecting unit 177 receives the communication state information from the MSM 110 according to whether the phone-module A performs a communication function and controls operations of the DMB data decoding unit 171, the DMB data storing unit 173, and the DMB data outputting unit 175 according to the communication state information.

For example, if the communication state detecting unit 177 detects that the MSM 110 performs the communication function, the communication state detecting unit 177 outputs an output stop signal to the DMB data outputting unit 175 so as to stop outputting DMB data. In addition, the communication state detecting unit 177 outputs a data storing signal to the DMB data decoding unit 171 and the DMB data storing unit 173 so as to allow the DMB data decoding unit 171 to deliver decoded DMB data to the DMB data storing unit 173 and allow the DMB data storing unit 173 to store the DMB data. In the meantime, if the communication state detecting unit 177 detects that the MSM 110 terminates the communication function, the communication state detecting unit 177 outputs an output start signal to the DMB data storing unit 173 and the DMB data outputting unit 175 so as to allow the DMB data stored in the DMB data storing unit 173 to be output through the DMB data outputting unit 175.

The DMB data decoding unit 171 decodes and outputs DMB data received through the DMB receiving unit 160. Herein, since it is assumed that the DMB data includes video data and audio data, the DMB data decoding unit 171 separates the video data and the audio data and then performs de-mutiplexing and decoding. After that, the DMB decoding unit 171 outputs the decoded video data and audio data to one of the DMB data outputting unit 175 and the DMB data storing unit 173 under the control of the communication state detecting unit 177. For example, if the DMB data decoding unit 171 delivers decoded DMB data to the DMB data outputting unit 175 and, if a data storing signal is delivered from the communication state detecting unit 177 is input into the data storing unit 173 in the first stage of the DMB operation, the decoded DMB data is delivered to the DMB data storing unit 173. In particular, the DMB data decoding unit 171 stores the decoded DMB data in the DMB data storing unit 173 until a corresponding DMB program is terminated after receiving the data storing signal. Thus, it is seen that the DMB data decoding unit, when outputting decoded DMB data, only outputs the data to one of the DMB data outputting unit 175 and the DMB data storing unit 173.

The DMB data storing unit 173 stores DMB data delivered from the DMB data decoding unit 171 and/or outputs the stored DMB data under the control of the communication state detecting unit 177. For example, if the data storing signal from the communication state detecting unit 177 is input into the data storing unit 173, the DMB data storing unit 173 stores the DMB data delivered from the DMB data decoding unit 171. In addition, if the output start signal from the communication state detecting unit 177 is input into the data storing unit 173, the stored DMB data is then delivered to the DMB data outputting unit 175. Herein, the DMB data storing unit 173 extracts DMB data in a sequence in which the DMB data is stored, that is, in a sequence according to the length of time during which the DMB data is stored and delivers the DMB data to the DMB data outputting unit 175. In addition, while providing the DMB data to the DMB data outputting unit 175, the DMB data storing unit 173 can receive and store DMB data received in real time from the DMB data decoding unit 171.

The DMB data outputting unit 175 outputs DMB data delivered from the DMB data decoding unit 171 or the DMB data storing unit 173. In other words, the DMB data outputting unit 175 delivers video data from among DMB data to the second LCD (reference numeral 180 of FIG 3) and audio data from among the DMB data to the second speaker (reference numeral 190 of FIG. 3).

Herein, the DMB data storing unit 173 in actual use may be incorporated into in the mobile communication terminal as shown in FIG. 3. In addition, an external memory (not shown e.g., RAM, ROM etc.) can be used for or by the DMB data storing unit 173. However, when the DMB data storing unit 173 includes the external memory, it is preferred that an optional step of scrambling DMB data using a predefined scrambling technique or algorithm is performed before the DMB data is stored in the DMB data storing unit 173 in order to provide for copyright protection of the DMB data. To this end, it is preferred that the DMB module 170 further includes a scrambling control unit (not shown).

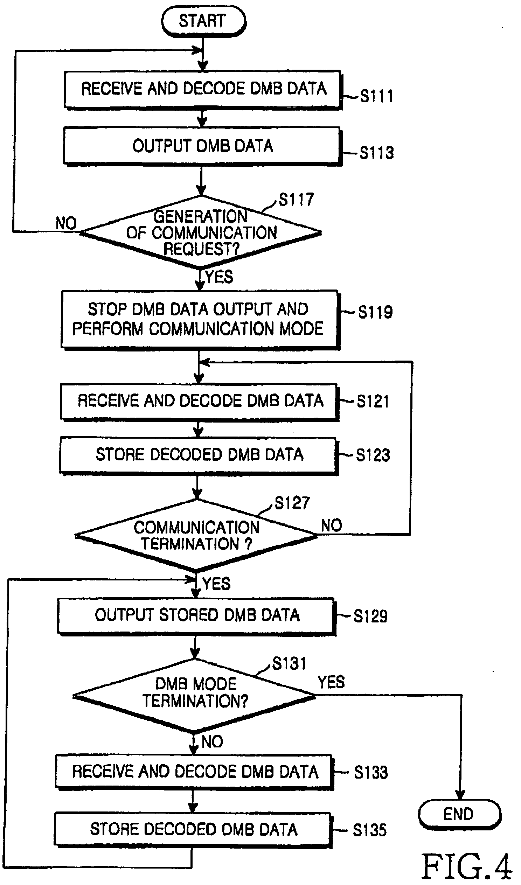

FIG. 4 is a flowchart illustrating a method for processing a communication function during a DMB output according to one embodiment of the present invention. In other words, FIG. 4 is a flowchart illustrating a method in which a mobile communication terminal processes the communication function according to an embodiment of the present invention when the communication function is requested while a user is viewing or listening to a DMB (i.e., in a DMB mode) by using the mobile communication terminal.

The mobile communication terminal determines if a communication request is generated while repeating a series of steps S111 and S113 of outputting DMB data after receiving and decoding the DMB data (S117).

Herein, the communication request is generated when a call is received by the mobile communication terminal and/or when a user selects the communication function in order to originate a call. For example, when a call is received, the mobile communication terminal informs the user of the received call such that the user may determine to perform the communication function. For example, the mobile communication terminal can optionally display a message such as "incoming call" or a caller's identification such as an originating number of the caller by overlaying the caller's originating number on a DMB screen and then allow the user to accept, reject or ignore the communication request or the reception of a corresponding call by providing the user of the mobile communication terminal the option to do so. In alternative embodiments, a musical melody, tone, a flash, a vibration, etc., optionally preselected by the mobile terminal's user, may be used to alert mobile communication the terminal's user of a recited tone.

In step S117, if the user selects a DMB data outputting function, the mobile communication terminal repeats the steps S111 and S113. However, if the user selects the communication function and if a corresponding communication is started, the mobile communication terminal stops DMB data output and performs a communication mode (S119). At this time, a DMB data receiving and decoding step is maintained (S121). In detail, although the DMB data output is stopped in order to support the communication function of the user, the real-time DMB data receiving and decoding step S121 performed in the mobile communication terminal is continuously performed. In addition, the DMB data through the step S121 are stored (S123). The steps S121 and S123 are repeatedly performed until the communication is terminated.

In step S123, the DMB data storage is necessary because the DMB data storage helps to overcome a disadvantage in which the user cannot view and/or listen to DMB simultaneously with a communication (i.e. a call etc.). In other words, the DMB data storage is necessary in order to provide the DMB service by using the DMB data stored through the steps S121 and S123 when the communication is terminated.

If the communication is terminated, the DMB data stored in step S123 are output (S129). Alternatively, if the communication is not terminated in step S127, the DMB data receiving and decoding step S121, a decoded DMB data storing step S123 is repeated. After the termination of a communication in step S127, stored DMB data is output (S129).

Herein, it is preferred that the DMB data storing step S123 and the DMB data outputting step S129 further include a step of optionally scrambling the DMB data, as discussed above, in order to adequately assure copyright protection of the DMB data. For example, when the DMB data is stored in an external device (e.g., an external memory), it is preferred that an appliance number or other unique identifier of a corresponding mobile communication terminal is included in the DMB data which is stored in step S123, and that step S129 further includes a step of comparing an appliance number stored in a mobile communication terminal intending to output the DMB data with an appliance number or other unique identifier included in the DMB data. Accordingly, through the comparison step, only an authorized mobile communication terminal (e.g., a mobile communication terminal previously authorized to use the DMB data or a mobile communication terminal of a subscriber having paid costs corresponding to the use of the DMB data) can output the DMB data. As a result, it is possible to assure copyright protection of corresponding DMB data and to prevent piracy of the DMB data. If the DMB mode is not ended in step S131, steps S133 and S135 (which are similar to steps S111 and S113 and S121 and S123 above, respectively and will not be further described) are performed and DMB data is then output in step S129. Alternatively, if the DMB mode is terminated in step S131, the process ends.

In the meantime, although the communication request in step S117 may be generated through a method for informing a user of a call reception such that the user may determine to perform the communication function, the present invention is not limited to the method.

For example, the present invention can initiate a generation of the communication request and instantaneously entering into a communication mode upon receipt of a call reception.

Also, before starting to receive the DMB data, a mobile communication terminal allows a user to preset handling information about the case of receiving a call during the viewing and/or the listening to of a DMB and may determine an operation mode thereof based on the set information. Specifically, the user can preset the operation modes of the mobile communication terminal before the initiation of the reception of the DMB data. For example a user can reset the operation modes of the mobile communication terminal so that when a call is received while a user views the DMB (1) the incoming call is ignored by the mobile communication terminal; (2) if the user answers the call, DMB data received during communication is recorded by the mobile communication terminal; and (3) if the user answers the call DMB data received during communication is not recorded by the mobile communication terminal. In step 117, the operation mode of the mobile communication terminal is determined based on the information preset by the user.

In the above described example, if the user sets the handling information to correspond to the first option, the mobile communication terminal may determine that the user refuses the communication in step S117 so as to perform steps after step S117. If the user sets the handling information to correspond to the second option, the mobile communication terminal may determine that the user accepts the communication and requests the received DMB data recording in step S117 so as to perform steps after step S119. In the meantime, if the user sets the handling information to correspond to the third option the mobile communication terminal may stop receiving the DMB data and answers the phone similarly to a conventional telephone answering method.

In addition, the communication request is generated when a call is originated as well as when a call is received. In detail, the communication request may be generated when the phone number of the other party is input from the user, when the call is originated, or when communication with the other party is achieved after the call is originated.

In the meantime, when the user sets the handling information to correspond to the second option, it is preferred that the mobile communication terminal allow the user to optionally set maximum recording time and recording capacity information for the received DMB data recording. Moreover, it is preferred that a storage space of the mobile communication terminal be taken into consideration. This is necessary in order to prevent problems caused by storing amount of DMB data which exceeds the storage capacity of the mobile communication terminal because the amount of the DMB data to be stored in the mobile communication terminal's memory.

As described above, according to the present invention, when a user performs a communication function while viewing or listening to a DMB using a mobile communication terminal, the DMB data received after the start of the communication function is stored and then output upon the ending of the communication, thereby preventing the loss of DMB data due to the communication. In other words, when engaging in a communication function of the mobile communication terminal while viewing or listening to a DMB, the mobile communication terminal stores a part of the DMB not viewed nor listened to due to the communication so that the user can view the DMB after the communication has ended.

The above description deals with a structure in which the DMB data are stored in one DMB data storing unit 173. However, a storage area for storing the DMB data may be divided into two areas.

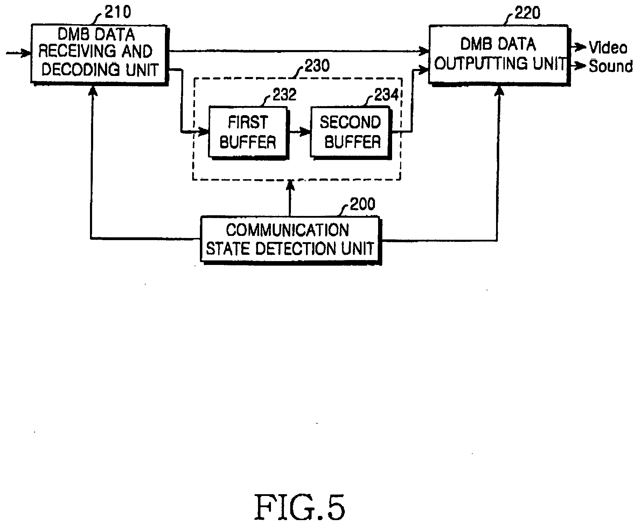

FIG 5 is a block diagram illustrating a structure of the DMB module realized in the mobile communication terminal 100 according to another embodiment of the present invention.

The DMB module includes a communication state detecting unit 200, a DMB data receiving and decoding unit 210, a memory 230, and a DMB data outputting unit 220.

The DMB data receiving and decoding unit 210 receives DMB data, decodes the received DMB data, and outputs the received DMB data. The DMB data receiving and decoding unit 210 divides the received DMB data into video data and audio data and then performs de-multiplexing and decoding with respect to the divided DMB data because the DMB data include video data and audio data as described above.

The communication state detecting unit 200 stores DMB data output from the DMB data receiving and decoding unit 210 in the memory 230 during a predetermined output delay time. The memory 230 shown in FIG 5 includes a first buffer 232 and a second buffer 234 (which are serially connected to each other) in order to store the DMB data under the control of the communication state detecting unit 230. Herein, the DMB data are stored in the first buffer 232 during the predetermined output delay time. The output delay time may be a predetermined period of time for which the user cannot view DMB, for example, communication time. The user may stop the output of the DMB data during a predetermined period of time. Herein, the user may temporarily stop the viewing of the DMB data by selecting a predetermined key used for temporarily interrupting the output of the DMB data.

The communication state detecting unit 200 stores DMB data output from the DMB data receiving and decoding unit 210 in the first buffer 232 of the memory 230 during a predetermined period of time determined as described above.

Thereafter, when the output of DMB data is requested, the communication state detecting unit 200 transfers the DMB data stored in the first buffer 232 to the second buffer 234 such that the DMB data are output to the DMB data outputting unit 220. When a user ends communication, the output request of the DMB data may be generated in reaction to the end of communication. In addition, when the user presses a corresponding key, the output request of the DMB data may be generated in reaction to the pressing of the key. However, it is well known to those skilled in the art that the present invention is not limited to these, but may be applied to all cases of stopping the output of the DMB data.

Although the DMB data outputting unit 220 is not shown in detail, the DMB data may be output through a speaker and a display unit. At this time, the communication state detecting unit 200 continuously stores DMB data output from the DMB data receiving and decoding unit 210 in the first buffer 232. Herein, it is natural that DMB data are continuously transferred to the second buffer 234 from the first data buffer 232.

In addition, the communication state detecting unit 200 may not store DMB data in the first buffer 232 if a broadcasting channel (through which a user is currently viewing DMB) is switched into another channel or if an advertisement is broadcasted through the current broadcasting channel. A structure for this can be realized by those skilled in the art.

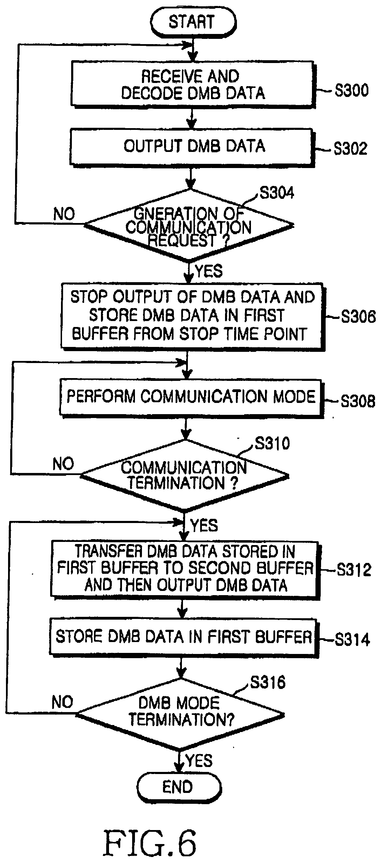

FIG 6 is a flowchart illustrating a method of processing a communication function during DMB output according to another embodiment of the present invention.

The communication state detecting unit 200 determines if communication request is generated while repeating a series of steps S300 and S302 of outputting DMB data after receiving and decoding the DMB data (step S304). Herein, the communication request is generated when a call is received to a mobile communication terminal or originated by a user as described above. In other words, the user may generate the communication request by responding to an incoming call or by originating a call. If the communication request is generated, the communication state detecting unit 200 stops the output of the DMB data and stores DMB data in the first buffer 232 from a time point in which the DMB data is stopped in step S306. Simultaneously, the communication state detecting unit 200 performs a communication mode in step S308 and determines if corresponding communication is terminated in step S310.

If the corresponding communication is terminated, the communication state detecting unit 200 transfers DMB data stored in the first buffer 232 to the second buffer 234 so as to allow the DMB data to be output to the DMB data outputting unit 220 from the second buffer 234 in step S312. Simultaneously, the communication state detecting unit 200 continuously stores DMB data in the first buffer 232 in step S314. In step S316, the communication state detecting unit 200 determines if a DMB mode is terminated. If the DMB mode is not terminated, the communication state detecting unit 200 returns to step S312 and continuously repeats steps S312 and S314.

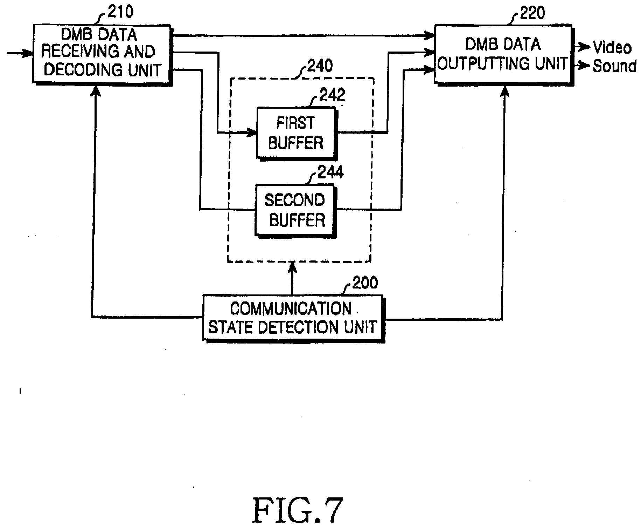

FIG. 7 is a block diagram illustrating a structure of the DMB module realized in the mobile communication terminal 100 according to another embodiment of the present invention.

The DMB module includes a communication state detecting unit 200, a DMB data receiving and decoding unit 210, a memory 240, and a DMB data outputting unit 220.

The DMB data receiving and decoding unit 210 receives DMB data, decodes the received DMB data, and outputs the received DMB data. The communication state detecting unit 200 stores DMB data output from the DMB data receiving and decoding unit 210 in the memory 240 during a predetermined output delay time. The memory 240 shown in FIG. 7 includes a first buffer 242 and a second buffer 244 (which are arranged in parallel) in order to store the DMB data under the control of the communication state detecting unit 200. Herein, the DMB data are stored in the first buffer 242 during the predetermined output delay time. As described above, the output delay time may be a predetermined period of time for which the user cannot view DMB, for example, communication time. The user may stop the output of the DMB data during a predetermined period of time. At this time, the user may temporarily stop the viewing of the DMB data by selecting a predetermined key for temporarily interrupting the output of the DMB data.

The communication state detecting unit 200 stores DMB data output from the DMB data receiving and decoding unit 210 in the first buffer 232 of the memory 240 during a predetermined period of time determined as described above. Thereafter, when the output of DMB data is requested, that is, when the reproduction of the DMB data is requested, the communication state detecting unit 200 allows DMB data stored in the first buffer 234 to be output to the DMB data outputting unit 220. Then, the DMB data outputting unit 220 outputs the DMB data through a speaker and a display unit (not shown) linked with the DMB data outputting unit 220. When DMB data stored in the first buffer 242 are output through the DMB data outputting unit 220, DMB data output from the DMB data receiving and decoding unit 210 are stored in the second buffer 244. In other words, when the reproduction of the DMB data is requested, the communication state detecting unit 200 controls the first buffer 234 to output the DMB data stored in the first buffer 234 to the DMB data outputting unit 220 and controls the second buffer 244 to store the DMB data output from the DMB data receiving and decoding unit 210.

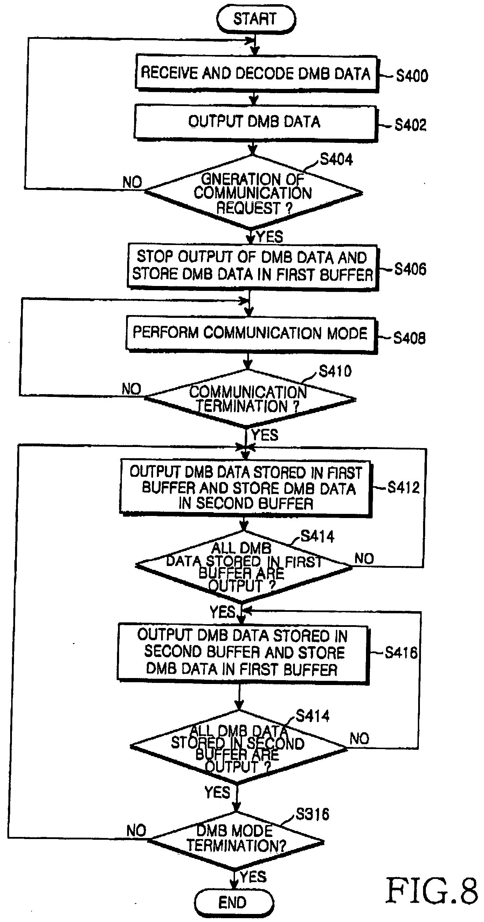

In addition, if all DMB data stored in the first buffer 242 are output, the communication state detecting unit 200 outputs DMB data stored in the second buffer 244 to the DMB data outputting unit 220. In this case, it is preferred that, when the DMB data stored in the second buffer 244 are output, the communication state detecting unit 200 stores DMB data output from the DMB data receiving and decoding unit 210 in the first buffer 242.FIG. 8 is a flowchart illustrating a method of processing a communication function during DMB output according to another embodiment of the present invention.

The communication state detecting unit 200 determines if communication request is generated while repeating a series of steps S400 and S402 of outputting DMB data after receiving and decoding the DMB data (S404). If the communication request is generated, the communication state detecting unit 200 stops the output of DMB data and stores DMB data in the first buffer 242 from a time point in which the DMB data is stopped in step 406. Simultaneously, the communication state detecting unit 200 performs a communication mode in step S408 and determines if corresponding communication is terminated in step 410.

If the corresponding communication is terminated, the communication state detecting unit 200 controls DMB data stored in the first buffer 242 to be output to the DMB data outputting unit 220 in step S412. Simultaneously, the communication state detecting unit 200 stores DMB data output from the DMB data receiving and decoding unit 210 in the second buffer 244. Subsequently, the communication state detecting unit 200 determines if all DMB data stored in the first buffer are output in step S414. If all DMB data stored in the first buffer are output to the DMB data outputting unit 220, the communication state detecting unit 200 outputs DMB data stored in the second buffer 244 to the DMB data outputting unit 220 and stores DMB data output from the DMB data receiving and decoding unit 210 in the first buffer 242 in step S416.

Thereafter, the communication state detecting unit 200 determines if all DMB data stored in the second buffer 244 are output in step S418. If all DMB data stored in the second buffer 244 are output to the DMB data outputting unit 220, the communication state detecting unit 200 returns to step 412 so as to output DMB data stored in the first buffer 242 to the DMB data outputting unit 220 and store DMB data output from the DMB data receiving and decoding unit 210 in the second buffer 244.

Similarly, the first buffer 242 and the second buffer 244 included in the memory 240 alternately store and output DMB data output from the DMB data receiving and decoding unit 210.

While the invention has been shown and described with reference to certain preferred embodiments thereof, it will be understood by those skilled in the art that various changes in form and details may be made therein without departing from the scope of the invention. That is, it is well known to those skilled in the art that, although DMB in a digital broadcasting service is described by way of example in the present description, the present invention should not be limited to DMB service, but may be applied to other digital broadcasting services (e.g., digital audio broadcasting (DAB), digital audio radio (DAR), digital radio broadcasting (DRB), and digital sound broadcasting (DSB). Consequently, the scope of the invention should not be limited to the embodiments, but should be defined by the appended claims.

## Claims

1. A mobile communication terminal (100) for processing a communication function during digital broadcasting output, the mobile communication terminal comprising:
a digital broadcasting data receiving unit (210) for receiving digital broadcasting data;
a communication state detecting unit (200) for controlling storage and/or output of received digital broadcasting data based on communication state information of the mobile communication terminal;
a storage unit (230) including a first buffer (232) and a second buffer (234), the first buffer for storing the received digital broadcasting data and the second buffer for receiving the digital broadcasting data from the first buffer and outputting the digital broadcasting data to an output unit (220) when displaying the digital broadcasting data is requested, under a control of the communication state detecting unit; and
the output unit (220) for outputting the received digital broadcasting data and/or the digital broadcasting data stored in the storage unit.

2. The mobile communication terminal as claimed in claim 1, further comprising an output interface unit for outputting the digital broadcasting data output from the output unit.

3. The mobile communication terminal as claimed in claim 2, wherein the output interface unit includes:
a display unit for outputting the digital broadcasting data in a visible form; and
a speaker unit for outputting the digital broadcasting data in an audible form.

4. The mobile communication terminal as claimed in one of claims 1 to 3, further comprising a scrambling control unit for scrambling digital broadcasting data before the digital broadcasting data is stored in the storage unit and for analyzing scrambled digital broadcasting data when the digital broadcasting data is read from the storage unit.

5. The mobile communication terminal as claimed in one of claims 1 to 4, wherein, if the communication state detecting unit detects that the mobile communication terminal starts a communication, the communication state detecting unit stops an output operation of the output unit and allows the storage unit to store the received digital broadcasting data.

6. The mobile communication terminal as claimed in one of claims 1 to 4, wherein, if the communication state detecting unit detects that the mobile communication terminal terminates a communication, the communication state detecting unit starts an output operation of the output unit and allows the storage unit to output the stored digital broadcasting data in a sequence according to a time in which the digital broadcasting data is stored, while storing the received digital broadcasting data and delivering the output digital broadcasting data to the output unit.

7. The mobile communication terminal as claimed in claim 1, wherein the first buffer is adapted to provide the second buffer with digital broadcasting data stored in the first buffer according to a First-in First out scheme.

8. The mobile communication terminal as claimed in one of claims 1 to 7, wherein, if the storage unit has no space for storing the received digital broadcasting data, the communication state detecting unit is adapted to report to a user that the storage unit has no space for storing the received digital broadcasting data.

9. The mobile communication terminal as claimed in claim 1, wherein if a broadcasting channel through which a user is currently viewing DMB is switched into another channel or if an advertisement is broadcasted through the current broadcasting channel, the communication state detecting unit is adapted not to store DMB data in the first buffer.

10. A mobile communication terminal (100) for processing a communication function during digital broadcasting output, the mobile communication terminal comprising:
a digital broadcasting data receiving unit (210) for receiving digital broadcasting data;
a communication state detecting unit (200) for controlling storage and/or output of received digital broadcasting data based on communication state information of the mobile communication terminal;
a storage unit (240) including a first buffer (242) and a second buffer (244) for storing the received digital broadcasting data under a control of the communication state detecting unit; and
an output unit (220) for outputting the received digital broadcasting data and/or the digital broadcasting data stored in the storage unit
wherein the communication state detecting unit is adapted to control digital broadcasting data stored in the second buffer to be output to the output unit when digital broadcasting data are stored in the first buffer and control digital broadcasting data stored in the first buffer to be output to the output unit when digital broadcasting data are stored in the second buffer.

11. The mobile communication terminal as claimed in claim 10, wherein, if the storage unit has no space for storing the received digital broadcasting data, the communication state detecting unit is adapted to report to a user that the storage unit has no space for storing the received digital broadcasting data.

12. A method for processing a communication function during a digital broadcasting output by a mobile communication terminal (100) including a storage unit (230) having first (232) and second buffers (234) for storing digital broadcasting data, the method comprising the steps of:
determining (S304) if a communication request is generated during the digital broadcasting output; and
if the communication request is generated, stopping (S306) digital broadcasting data output and storing received digital broadcasting data in the first buffer;
if corresponding communication is terminated, transferring (S312) the digital broadcasting data from the first buffer to the second buffer; and
outputting the digital broadcasting data from the second buffer.

13. The method as claimed in claim 12, further comprising a step of extracting and outputting the stored digital broadcasting data in a sequence according to a time in which the stored digital broadcasting data is stored, after the communication is terminated.

14. The method as claimed in claim 12 or 13, wherein an operation mode of the mobile communication terminal is determined based on information set by a user when the communication request is generated.

15. The method as claimed in one of claims 12 to 14, wherein the storage step includes a step of scrambling the digital broadcasting data before the digital broadcasting data is stored.

16. The method as claimed in claim 14, wherein the stored digital broadcasting data outputting step further includes analyzing the scrambled and stored digital broadcasting data before the scrambled and stored digital broadcasting data is output.

17. The method as claimed in claim 16, further comprising the step of reporting to a user that there is no space for storing the received digital broadcasting data, if there is no space for storing the received digital broadcasting data.

18. The method as claimed in claim 12, further comprising the step of not storing DMB data in the first buffer, if a broadcasting channel through which a user is currently viewing DMB is switched into another channel or if an advertisement is broadcasted through the current broadcasting channel.

19. A method for processing a communication function during a digital broadcasting output by a mobile communication terminal (100) including a storage unit (240) having first (242) and second (244) buffers for storing a digital broadcasting data, the method comprising the steps of:
determining (S404) if a communication request is generated during the digital broadcasting output; and
when the communication request is generated, stopping digital broadcasting data output and storing received digital broadcasting data in the first or second buffers;
when the digital broadcasting data is stored in the first buffer, outputting the digital broadcasting data stored in the second buffer; and
when the digital broadcasting data is stored in the second buffer, outputting the digital broadcasting data stored in the first buffer.

## Patentansprüche

1. Mobiles Kommunikationsendgerät (100) zur Verarbeitung einer Kommunikationsfunktion während der digitalen Rundfunkausgabe, wobei das mobile Kommunikationsendgerät umfasst:
eine digitale Rundfunkdaten-Empfangseinheit (210) zum Empfangen von digitalen Rundfunkdaten;
eine Kommunikationszustands-Ermittlungseinheit (200) zum Steuern der Speicherung und/oder Ausgabe von empfangenen Rundfunkdaten basierend auf Kommunikationszustandsinformationen des mobilen Kommunikationsendgeräts;
eine Speichereinheit (230) mit einem ersten Puffer (232) und einem zweiten Puffer (234), wobei der erste Puffer zum Speichern der empfangenen digitalen Rundfunkdaten dient und der zweite Puffer zum Empfangen der digitalen Rundfunkdaten von dem ersten Puffer und zum Ausgeben der digitalen Rundfunkdaten an eine Ausgabeeinheit (220) dient, wenn angezeigt wird, dass die digitalen Rundfunkdaten angefordert werden, unter einer Steuerung der Kommunikationszustands-Ermittlungseinheit; und
die Ausgabeeinheit (220) zum Ausgeben der empfangenen digitalen Rundfunkdaten und/oder der digitalen Rundfunkdaten, die in der Speichereinheit gespeichert sind.

2. Mobiles Kommunikationsendgerät nach Anspruch 1, des Weiteren umfassend eine Ausgabeschnittstelleneinheit zum Ausgeben der digitalen Rundfunkdatenausgabe aus der Ausgabeeinheit.

3. Mobiles Kommunikationsendgerät nach Anspruch 2, wobei die Ausgabeschnittstelleneinheit beinhaltet:
eine Anzeigeeinheit zum Ausgeben der digitalen Rundfunkdaten in sichtbarer Form; und
eine Lautsprechereinheit zum Ausgeben der digitalen Rundfunkdaten in hörbarer Form.

4. Mobiles Kommunikationsendgerät nach einem der Ansprüche 1 bis 3, des Weiteren umfassend eine Verschlüsselungs-Steuerungseinheit zum Verschlüssen der digitalen Rundfunkdaten, bevor die digitalen Rundfunkdaten in der Speichereinheit gespeichert werden und zum Analysieren von verschlüsselten digitalen Rundfunkdaten, wenn die digitalen Rundfunkdaten aus der Speichereinheit gelesen werden.

5. Mobiles Kommunikationsendgerät nach einem der Ansprüche 1 bis 4, wobei, wenn die Kommunikationszustands-Ermittlungseinheit ermittelt, dass das mobile Kommunikationsendgerät eine Kommunikation beginnt, die Kommunikationszustands-Ermittlungseinheit einen Ausgabevorgang der Ausgabeeinheit stoppt und die Speicherung der empfangenen digitalen Rundfunkdaten durch die Speichereinheit zulässt.

6. Mobiles Kommunikationsendgerät nach einem der Ansprüche 1 bis 4, wobei, wenn die Kommunikationszustands-Ermittlungseinheit ermittelt, dass das mobile Kommunikationsendgerät eine Kommunikation beendet, die Kommunikationszustands-Ermittlungseinheit einen Ausgabevorgang der Ausgabeeinheit startet und die Ausgabe der gespeicherten digitalen Rundfunkdaten durch die Speichereinheit in einer Sequenz entsprechend einer Zeit zulässt, in der die digitalen Rundfunkdaten gespeichert sind, während gleichzeitig die empfangenen digitalen Rundfunkdaten gespeichert werden und die digitalen Rundfunkdaten an die Ausgabeeinheit geliefert werden.

7. Mobiles Kommunikationsendgerät nach Anspruch 1, wobei der erste Puffer dazu eingerichtet ist, den zweiten Puffer mit digitalen Rundfunkdaten, die in dem ersten Puffer gespeichert sind, nach einem First-in-First-out-Schema zu versorgen.

8. Mobiles Kommunikationsendgerät nach einem der Ansprüche 1 bis 7, wobei, wenn die Speichereinheit keinen Platz zum Speichern der empfangenen digitalen Rundfunkdaten hat, die Kommunikationszustands-Ermittlungseinheit dazu eingerichtet ist, einem Benutzer zu melden, dass die Speichereinheit keinen Platz zum Speichern der empfangenen digitalen Rundfunkdaten hat.

9. Mobiles Kommunikationsendgerät nach Anspruch 1, wobei, wenn ein Rundfunkkanal, über den ein Benutzer aktuell DMB ansieht, auf einen anderen Kanal wechselt oder wenn eine Werbung über den aktuellen Rundfunkkanal gesendet wird, die Kommunikationszustands-Ermittlungseinheit dazu eingerichtet ist, die DMB-Daten nicht in dem ersten Puffer zu speichern.

10. Mobiles Kommunikationsendgerät (100) zur Verarbeitung einer Kommunikationsfunktion während der digitalen Rundfunkausgabe, wobei das mobile Kommunikationsendgerät umfasst:
eine digitale Rundfunkdaten-Empfangseinheit (210) zum Empfangen von digitalen Rundfunkdaten;
eine Kommunikationszustands-Ermittlungseinheit (200) zum Steuern der Speicherung und/oder Ausgabe von empfangenen Rundfunkdaten basierend auf Kommunikationszustandsinformationen des mobilen Kommunikationsendgeräts;
eine Speichereinheit (240) mit einem ersten Puffer (242) und einem zweiten Puffer (244) zum Speichern der empfangenen digitalen Rundfunkdaten unter einer Steuerung der Kommunikationszustands-Ermittlungseinheit; und
eine Ausgabeeinheit (220) zum Ausgeben der empfangenen digitalen Rundfunkdaten und/oder der digitalen Rundfunkdaten, die in der Speichereinheit gespeichert sind,
wobei die Kommunikationszustands-Ermittlungseinheit dazu eingerichtet ist, die Ausgabe von digitalen Rundfunkdaten, die in dem zweiten Puffer gespeichert sind, an die Ausgabeeinheit zu steuern, wenn digitale Rundfunkdaten in dem ersten Puffer gespeichert sind und die Ausgabe von digitalen Rundfunkdaten, die in dem ersten Puffer gespeichert sind an die Ausgabeeinheit zu Steuern, wenn digitale Rundfunkdaten in dem zweiten Puffer gespeichert sind.

11. Mobiles Kommunikationsendgerät nach Anspruch 10, wobei, wenn die Speichereinheit keinen Platz zum Speichern der empfangenen digitalen Rundfunkdaten hat, die Kommunikationszustands-Ermittlungseinheit dazu eingerichtet ist, einem Benutzer zu melden, dass die Speichereinheit keinen Platz zum Speichern der empfangenen digitalen Rundfunkdaten hat.

12. Verfahren zur Verarbeitung einer Kommunikationsfunktion während der digitalen Rundfunkausgabe durch ein mobiles Kommunikationsendgerät (100), das eine Speichereinheit (230) mit einem ersten (232) und einem zweiten Puffer (234) zum Speichern von digitalen Rundfunkdaten aufweist, wobei das Verfahren folgende Schritte umfasst:
Bestimmen (S304), ob eine Kommunikationsanforderung während der digitalen Rundfunkausgabe erzeugt wird; und
wenn die Kommunikationsanforderung erzeugt wird, Stoppen (S306) der digitalen Rundfunkdatenausgabe und Speichern der empfangenen digitalen Rundfunkdaten in dem ersten Puffer;
wenn die entsprechende Kommunikation endet, Übertragen (S312) der digitalen Rundfunkdaten aus dem ersten Puffer in den zweiten Puffer; und
Ausgeben der digitalen Rundfunkdaten aus dem zweiten Puffer.

13. Verfahren nach Anspruch 12, des Weiteren umfassend einen Schritt zum Extrahieren und Ausgeben der gespeicherten digitalen Rundfunkdaten in einer Sequenz entsprechend einer Zeit, in der die gespeicherten digitalen Rundfunkdaten gespeichert sind, nachdem die Kommunikation beendet wurde.

14. Verfahren nach Anspruch 12 oder 13, wobei ein Betriebsmodus des mobilen Kommunikationsendgeräts basierend auf von einem Benutzer eingestellten Informationen bestimmt wird, wenn die Kommunikationsanforderung erzeugt wird.

15. Verfahren nach einem der Ansprüche 12 bis 14, wobei der Speicherungsschritt einen Schritt zum Verschlüsseln der digitalen Rundfunkdaten beinhaltet, bevor die digitalen Rundfunkdaten gespeichert werden.

16. Verfahren nach Anspruch 14, wobei der Schritt zum Ausgeben der gespeicherten digitalen Rundfunkdaten des Weiteren das Analysieren der verschlüsselten und gespeicherten digitalen Rundfunkdaten beinhaltet, bevor die verschlüsselten und gespeicherten digitalen Rundfunkdaten ausgegeben werden.

17. Verfahren nach Anspruch 16, des Weiteren umfassend den Schritt zum Benachrichtigen eines Benutzers, dass kein Platz zum Speichern der empfangenen digitalen Rundfunkdaten vorhanden ist, wenn kein Platz zum Speichern der empfangenen digitalen Rundfunkdaten vorhanden ist.

18. Verfahren nach Anspruch 12, des Weiteren umfassend den Schritt des Nicht-Speicherns von DMB-Daten in dem ersten Puffer, wenn ein Rundfunkkanal, über den ein Benutzer gegenwärtig DMB ansieht, auf einen anderen Kanal wechselt oder wenn eine Werbung über den aktuellen Rundfunkkanal gesendet wird.

19. Verfahren zur Verarbeitung einer Kommunikationsfunktion während der digitalen Rundfunkausgabe durch ein mobiles Kommunikationsendgerät (100), das eine Speichereinheit (240) mit einem ersten (242) und einem zweiten Puffer (244) zum Speichern von digitalen Rundfunkdaten aufweist, wobei das Verfahren folgende Schritte umfasst:
Bestimmen (S404), ob eine Kommunikationsanforderung während der digitalen Rundfunkausgabe erzeugt wird; und
wenn die Kommunikationsanforderung erzeugt wird, Stoppen der digitalen Rundfunkdatenausgabe und Speichern der empfangenen digitalen Rundfunkdaten in dem ersten oder zweiten Puffer;
wenn die digitalen Rundfunkdaten in dem ersten Puffer gespeichert sind, Ausgeben der digitalen Rundfunkdaten, die in dem zweiten Puffer gespeichert sind; und
wenn die digitalen Rundfunkdaten in dem zweiten Puffer gespeichert sind, Ausgeben der digitalen Rundfunkdaten, die in dem ersten Puffer gespeichert sind.

## Revendications

1. Terminal de communication mobile (100) pour traiter une fonction de communication pendant une sortie de radiodiffusion numérique, le terminal de communication mobile comprenant :
une unité de réception de données de radiodiffusion numérique (210) pour recevoir des données de radiodiffusion numérique ;
une unité de détection d'état de communication (200) pour commander la mémorisation et/ou la sortie des données de radiodiffusion numérique reçues en se basant sur des informations d'état de communication du terminal de communication mobile ;
une unité de mémorisation (230) incluant un premier tampon (232) et un second tampon (234), le premier tampon étant destiné à mémoriser les données de radiodiffusion numérique reçues et le second tampon étant destiné à recevoir les données de radiodiffusion numérique provenant du premier tampon et à fournir en sortie les données de radiodiffusion numérique à une unité de sortie (220) lorsqu'un affichage des données de radiodiffusion numérique est demandé, sous le contrôle de l'unité de détection d'état de communication ; et
l'unité de sortie (220) étant destinée à fournir en sortie les données de radiodiffusion numérique reçues et/ou les données de radiodiffusion numérique mémorisées dans l'unité de mémorisation.

2. Terminal de communication mobile selon la revendication 1, comprenant en outre une unité d'interface de sortie pour fournir en sortie les données de radiodiffusion numérique fournies en sortie par l'unité de sortie.

3. Terminal de communication mobile selon la revendication 2, dans lequel l'unité d'interface de sortie comporte :
une unité d'affichage pour fournir en sortie les données de radiodiffusion numérique sous une forme visible ; et
une unité de haut-parleur pour fournir en sortie les données de radiodiffusion numérique sous une forme audible.

4. Terminal de communication mobile selon l'une des revendications 1 à 3, comprenant en outre une unité de commande d'embrouillage pour embrouiller les données de radiodiffusion numérique avant de mémoriser les données de radiodiffusion numérique dans l'unité de mémorisation et pour analyser les données de radiodiffusion numérique embrouillées lorsque les données de radiodiffusion numérique sont lues dans l'unité de mémorisation.

5. Terminal de communication mobile selon l'une des revendications 1 à 4, dans lequel, si l'unité de détection d'état de communication détecte que le terminal de communication mobile démarre une communication, l'unité de détection d'état de communication interrompt l'opération de sortie de l'unité de sortie et permet à l'unité de mémorisation de mémoriser les données de radiodiffusion numérique reçues.

6. Terminal de communication mobile selon l'une des revendications 1 à 4, dans lequel, si l'unité de détection d'état de communication détecte que le terminal de communication mobile a terminé une communication, l'unité de détection d'état de communication démarre une opération de sortie de l'unité de sortie et permet à l'unité de mémorisation de fournir en sortie les données de radiodiffusion numérique mémorisées en une séquence en fonction du temps auquel les données de radiodiffusion numérique sont mémorisées, tout en mémorisant les données de radiodiffusion numérique reçues et en fournissant les données de radiodiffusion numérique de sortie à l'unité de sortie.

7. Terminal de communication mobile selon la revendication 1, dans lequel le premier tampon est adapté à fournir au second tampon des données de radiodiffusion numérique mémorisées dans le premier tampon selon un aménagement « premier entré, premier sorti ».

8. Terminal de communication mobile selon l'une des revendications 1 à 7, dans lequel, si l'unité de mémorisation n'a plus de place pour mémoriser les données de radiodiffusion numérique reçues, l'unité de détection d'état de communication est adaptée à informer un utilisateur que l'unité de mémorisation n'a plus de place pour mémoriser les données de radiodiffusion numérique reçues.

9. Terminal de communication mobile selon la revendication 1, dans lequel, si un canal de radiodiffusion par l'intermédiaire duquel un utilisateur est en train de regarder une DMB est commuté vers un autre canal ou si un message publicitaire est diffusé par l'intermédiaire du canal de radiodiffusion courant, l'unité de détection d'état de communication est adaptée à ne pas mémoriser les données de DMB dans le premier tampon.

10. Terminal de communication mobile (100) pour traiter une fonction de communication pendant une sortie de radiodiffusion numérique, le terminal de communication mobile comprenant :
une unité de réception de données de radiodiffusion numérique (210) pour recevoir des données de radiodiffusion numérique ;
une unité de détection d'état de communication (200) pour commander la mémorisation et/ou la sortie des données de radiodiffusion numérique reçues en se basant sur des informations d'état de communication du terminal de communication mobile ;
une unité de mémorisation (240) incluant un premier tampon (242) et un second tampon (244) pour mémoriser les données de radiodiffusion numérique reçues sous le contrôle de l'unité de détection d'état de communication ; et
une unité de sortie (220) pour fournir en sortie les données de radiodiffusion numérique reçues et/ou les données de radiodiffusion numérique mémorisées dans l'unité de mémorisation
dans lequel l'unité de détection d'état de communication est adaptée à commander les données de radiodiffusion numérique mémorisées dans le second tampon pour être fournies en sortie à l'unité de sortie lorsque des données de radiodiffusion numérique sont mémorisées dans le premier tampon et à commander les données de radiodiffusion numérique mémorisées dans le premier tampon pour être fournies en sortie à l'unité de sortie lorsque les données de radiodiffusion numérique sont mémorisées dans le second tampon.

11. Terminal de communication mobile selon la revendication 10, dans lequel, si l'unité de mémorisation n'a plus de place pour mémoriser les données de radiodiffusion numérique reçues, l'unité de détection d'état de communication est adaptée à informer un utilisateur que l'unité de mémorisation n'a plus de place pour mémoriser les données de radiodiffusion numérique reçues.

12. Procédé de traitement d'une fonction de communication pendant une sortie de radiodiffusion numérique par un terminal de communication mobile (100) incluant une unité de mémorisation (230) comportant des premier (232) et second tampons (234) pour mémoriser des données de radiodiffusion numérique, le procédé comprenant les étapes consistant à :
déterminer (S304) si une demande de communication est générée pendant la sortie de radiodiffusion numérique ; et
si la demande de communication est générée, interrompre (S306) la sortie de données de radiodiffusion numérique et mémoriser dans le premier tampon les données de radiodiffusion numérique reçues ;
si la communication correspondante est terminée, transférer (S312) les données de radiodiffusion numérique du premier tampon au second tampon ; et
fournir en sortie les données de radiodiffusion numérique depuis le second tampon.

13. Procédé selon la revendication 12, comprenant en outre une étape d'extraction et de fourniture en sortie des données de radiodiffusion numérique mémorisées en une séquence en fonction du temps auquel les données de radiodiffusion numérique mémorisées sont mémorisées, après la fin de la communication.

14. Procédé selon la revendication 12 ou 13, dans lequel le mode de fonctionnement du terminal de communication mobile est déterminé en se basant sur des informations réglées par un utilisateur lorsque la demande de communication est générée.

15. Procédé selon l'une des revendications 12 à 14, dans lequel l'étape de mémorisation comporte une étape d'embrouillage des données de radiodiffusion numérique avant de mémoriser les données de radiodiffusion numérique.

16. Procédé selon la revendication 14, dans lequel l'étape de fourniture en sortie des données de radiodiffusion numérique mémorisées comporte en outre l'analyse des données de radiodiffusion numérique embrouillées et mémorisées avant de fournir en sortie les données de radiodiffusion numérique embrouillées et mémorisées.

17. Procédé selon la revendication 16, comprenant en outre l'étape consistant à informer un utilisateur du fait qu'il n'y a plus de place pour mémoriser les données de radiodiffusion numérique reçues, s'il n'y a plus de place pour mémoriser les données de radiodiffusion numérique reçues.

18. Procédé selon la revendication 12, comprenant en outre l'étape consistant à ne pas mémoriser des données de DMB dans le premier tampon, si un canal de radiodiffusion par l'intermédiaire duquel un utilisateur est en train de regarder une DMB est commuté vers un autre canal ou si un message publicitaire est diffusé par l'intermédiaire du canal de radiodiffusion courant.

19. Procédé de traitement d'une fonction de communication pendant une sortie de radiodiffusion numérique par un terminal de communication mobile (100) incluant une unité de mémorisation (240) comportant des premier (242) et second (244) tampons pour mémoriser des données de radiodiffusion numérique, le procédé comprenant les étapes consistant à :
déterminer (S304) si une demande de communication est générée pendant la sortie de radiodiffusion numérique ; et
lorsque la demande de communication est générée, interrompre la sortie de données de radiodiffusion numérique et mémoriser dans le premier ou le second tampon les données de radiodiffusion numérique reçues ;
lorsque les données de radiodiffusion numérique sont mémorisées dans le premier tampon, fournir en sortie les données de radiodiffusion numérique mémorisées dans le second tampon ; et
lorsque les données de radiodiffusion numérique sont mémorisées dans le second tampon, fournir en sortie les données de radiodiffusion numérique mémorisées dans le premier tampon.
